Europäisches Patentamt

European Patent Office

Office européen des brevets

(19)

(11) EP 0 509 467 B1

(12) ## EUROPEAN PATENT SPECIFICATION

(45) Date of publication and mention
of the grant of the patent:
**24.01.1996 Bulletin 1996/04**

(51) Int Cl.6: **G11B 11/10**, G11B 13/04

(21) Application number: 92106477.0

(22) Date of filing: **15.04.1992**

(54) **Magneto-optical recording medium**

Magnetooptischer Aufzeichnungsträger

Milieu d'enregistrement magnéto-optique

(84) Designated Contracting States:
**DE FR GB**

(30) Priority: **17.04.1991 JP 112416/91**

(43) Date of publication of application:
**21.10.1992 Bulletin 1992/43**

(73) Proprietor: **SHIN-ETSU CHEMICAL CO., LTD.
Chiyoda-ku, Tokyo (JP)**

(72) Inventors:
• **Kaneko, Hideo
Kawasaki-shi, Kanagawa-ken (JP)**
• **Tokunaga, Katsushi
Suita-shi, Osaka-fu (JP)**

• **Tawara, Yoshio
Yokohama-shi, Kanagawa-ken (JP)**
• **Shimizu, Yoshiaki
Kawasaki-shi, Kanagawa-ken (JP)**
• **Nomura, Tadao
Kawasaki-shi, Kanagawa-ken (JP)**

(74) Representative: **Dr. Fuchs, Dr. Luderschmidt,
Dr. Mehler, Dipl.-Ing. Weiss, Patentanwälte
D-65036 Wiesbaden (DE)**

(56) References cited:
**EP-A- 0 349 271          EP-A- 0 382 204**

• **PATENT ABSTRACTS OF JAPAN, unexamined
applications, P field, vol. 14, no. 561, December
13, 1990 THE PATENT OFFICE JAPANESE
GOVERNMENT page 143 P 1142**

**Description**

BACKGROUND OF THE INVENTION

The present invention relates to a magneto-optical recording medium or, more particularly, to a magneto-optical recording medium having greatly improved recording sensitivity and capable of giving a high C/N ratio.

Along with the rapid progress of the society toward higher and higher importance of information, development of recording media of large recording capacity is eagerly desired and so-called magneto-optical discs are highlighted in this regard as a promising rewritable recording medium. Extensive investigations have been and are being undertaken with an object to upgrade the performance of magneto-optical recording media while the most important problems therein include increasing of the data-transfer velocity and in the recording sensitivity in order to decrease the access time.

In the magneto-optical recording media now under practical use, the recording element is a thin film formed, on a transparent dielectric layer, of an alloy of transition metals including a rare earth metal such as an alloy of terbium, iron and cobalt, referred to as a TbFeCo alloy hereinbelow. A problem in a recording layer formed from a TbFeCo alloy is the relatively small Kerr rotation angle which is only about 0.3°. In order to compensate this small value of the Kerr rotation angle, various attempts and proposals have been heretofore made to increase the C/N ratio in playing back of the recorded signals, of which Japanese Patent Kokai 62-27458 proposes a four-layered structure formed on a transparent substrate plate including, successively, a first dielectric layer, a recording layer of the magnetic alloy, a second dielectric layer and a metallic reflecting layer formed on a transparent substrate plate.

It is important in the design of the above mentioned four-layered structure to adequately select the material and thickness of each of the layers in order to obtain an optimum effect of enhancement of the Kerr rotation angle as well as from the standpoint of the thermal effect. In the conventional four-layered structure, however, the first dielectric layer is also under duty for the enhancement of the Kerr rotation angle so that the material and thickness thereof are under limitation by the optical characteristics. The limitation in this regard is sometimes incompatible with the other requirements for the material and thickness that the first dielectric layer must play a role as a protecting film for the recording layer. Assuming that the thickness of the first dielectric layer is d, wavelength of the incident light is $\lambda$ and refractive index of the dielectric layer is n, for example, it is taught in Japanese Patent Kokai 2-240845 that an equation of $d = \lambda/(4n)$ is held for these parameters and the value of n should be about 2.0 or larger in order to obtain an increased Kerr rotation angle.

In this regard, a proposal has been made in Japanese Patent Kokai 2-226531 for a modified design of the four-layered structure that the first dielectric layer is freed from the duty for the enhancement effect to serve only as a protecting film leaving the duty for the enhancement effect solely to the second dielectric layer. This method is indeed advantageous in respect of the possibility of free selection of the material and thickness of the first dielectric layer. A problem there, however, is that the thickness of the recording layer must be small enough in order to have the second dielectric layer exhibit a full enhancment effect because, when the thickness of the recording layer is so large as to exceed, for example, 30 nm, a large portion of the incident light is absorbed in the recording layer and cannot reach the second dielectric layer. An alternative proposal is made in Japanese Patent Publication 2-63562 to decrease the thickness of the recording layer though in consideration of only the increasing effect on the Kerr rotation angle paying no attention to the problem of the recording sensitivity.

The inventors have previously discovered that the recording sensitivity of a magneto-optical recording medium can be improved when the first dielectric layer is formed from a material having a relatively small refractive index enabling decrease of the thickness of the recording layer and leaving the duty of the enhancement effect on the Kerr rotation angle mainly to the second dielectric layer. A problem left unsolved by this method is that the value of the C/N ratio cannot be large enough by the optimization of thickness of the respective layers so as merely to have the maximum values of the Kerr rotation angle and the reflectivity so that it is a conclusion that the Kerr ellipticity must also be taken into consideration besides the Kerr rotation angle in order to obtain a sufficiently large C/N ratio.

The Kerr ellipticity above mentioned is a parameter relative to the phase difference between the polarized light P and polarized light S while this phase difference originates in the optical head for the disc drive. The C/N ratio of the play-back signals is degraded depending on the total of the phase difference due to the optical head and the phase difference due to the Kerr ellipticity caused by the layered structure of the recording medium. Since the phase difference due to the optical head differs between magneto-optical disc drives so that there may be a case in which the C/N ratio varies greatly from drive to drive as a consequence of summing up of the phase difference due to the optical head and that due to the recording medium so that the Kerr ellipticity due to the recording medium should be as small as possible.

Japanese Patent Kokai 2-254648 proposes to decrease the Kerr ellipticity in a layered structure of a magneto-optical recording medium in which the recording layer has a thickness of 25 to 30 nm and the enhancement effect on the Kerr rotation angle is obtained in the first dielectric layer. This layered structure, however, has a disadvantage that the material and thickness of the first dielectric layer are limited not to give an increasing effect on the recording sensitivity.

## SUMMARY OF THE INVENTION

The present invention accordingly has an object to provide a novel and improved magneto-optical recording medium free from the above described problems and disadvantages in the magneto-optical recording media of a layered structure.

Thus, the magneto-optical recording medium provided by the invention is an integral body consisting of a substrate plate, a first dielectric layer formed on the substrate plate, a recording layer formed on the first dielectric layer, a second dielectric layer formed on the recording layer and a reflecting layer formed on the second dielectric layer; the magneto-optical recording medium is characterised in that each of the recording layer and the second dielectric layer has such a thickness that the angle $\delta$ given by the equation $\delta = \tan^{-1} (\varepsilon/\theta k)$, in which $\varepsilon$ is the Kerr ellipticity of the regenerative light and $\theta k$ is the Kerr rotation angle, does not exceed 10°, the thickness of the recording layer being in the range from 8 nm to 18 nm

## BRIEF DESCRIPTION OF THE DRAWING

Figures 1 and 2 are each a graph showing the sheet resistance and the coercive force, respectively, of the recording layer in magneto-optical recording media as a function of the thickness of the layer.

Figure 3 is a graph showing equivalent angle curves for the phase difference $\delta$ taking the thickness values of the first and the second dielectric layers in magneto-optical recording media as the abscissa and as the ordinate, respectively.

Figure 4 is a graph showing equivalent angle curves for the phase difference $\delta$ taking the thickness values of the recording layer and the second dielectric layer in magneto-optical recording media as the abscissa and as the ordinate, respectively.

Figure 5 is a graph showing the optimum recording sensitivity as a function of the thickness of the recording layer in magneto-optical recording media.

## DETAILED DESCRIPTION OF THE PREFERRED EMBODIMENTS

As is described above, the most characteristic feature in the inventive magneto-optical recording medium having a greatly improved recording sensitivity and a high C/N ratio consists in the unique selection of the thickness of each of the recording layer and the second dielectric layer in the layered structure so as to satisfy the specific relationship between the Kerr ellipticity $\varepsilon$ of the regenerative light and the Kerr rotation angle $\theta k$, the thickness of the recording layer being within a specified range.

Namely, the Kerr ellipticity $\varepsilon$ of the regenerative light and the Kerr rotation angle $\theta k$ satisfy the requirement that the angle $\delta$ defined by the equation $\delta = \tan^{-1} (\varepsilon/\theta k)$ does not exceed 10° assuming that the thickness of the recording layer is in the range from 8 nm to 18 nm in the layered structure of a magneto-optical recording medium.

The layered structure *per se* of the inventive magneto-optical recording medium is rather conventional as consisting of four layers successively formed on a substrate plate including a first dielectric layer, a recording layer, a second dielectric layer and a reflecting layer. The material of the substrate plate is not particularly limitative and various kinds of transparent materials can be used therefor including various grades of glass and various synthetic resins such as polycarbonate resins, polyolefins, poly(methyl methacrylate) resins and the like though not particularly limitative thereto. The magnetic alloy forming the recording layer is also not particularly limitative including various types of alloys of transition metals including a rare earth metal such as the TbFeCo alloys. Further, the reflecting layer is formed from a metal of high reflectivity such as aluminum and aluminum-based alloys. It is optional that the substrate plate is provided with a thin protecting coating film having electroconductivity such as a film of tin oxide SnO on the surface opposite to the first dielectric layer in order to prevent deposition of dusts or occurrence of scratches.

Various inorganic materials can be used for forming the first dielectric layer provided that the layer thereof is a material impermeable to oxygen and moisture and can be selected from the group consisting of SiN, AlN, AlSiN, SiC, BN, SiCN, SiO and the like containing or not containing hydrogen. The thickness of the first dielectric layer is preferably 60 nm or smaller in view of the possible troubles with a dielectric layer of a large thickness such as exfoliation of the layer, crack formation in the layer and warping of the substrate plate although the prior art teaches a larger thickness of 70 to 120 nm with a refractive index of about 2 or larger in respect of the optical limitation or 130 nm or larger in respect of the protecting effect in the conventional layered structure of the magneto-optical recording medium in which enhancement of the Kerr rotation angle is obtained in the first dielectric layer.

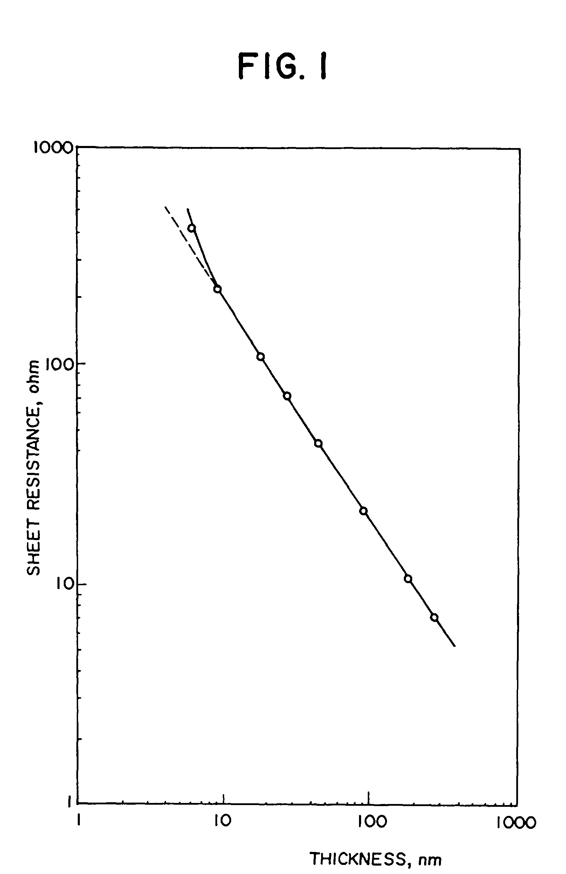

As is understood from the above given description, selection of the thickness of the recording layer is the first choice to be made although the thickness cannot be too small because, when formation of a recording layer having a very small thickness is intended, the layer formed can no longer be a continuum but is formed in discrete areas. Formation of the recording layer in such discrete areas can well be demonstrated by measuring the sheet resistance of the recording layer formed on the first dielectric layer. Thus, a substrate plate of glass was firstly provided with a film of SiN having a thickness of 20 nm as the first dielectric layer, secondly with a film of a TbFeCo alloy as the recording layer having a varied thickness and thirdly with a film of SiN having a thickness of 30 nm as the second dielectric layer and the sheet resistance of the recording layer having a varied thickness was measured to give the results shown in Figure 1 which gives the value of the sheet resistance in ohm as a function of the thickness of the layer in nm plotted on logarithmic scales. As is shown by the graph, a good linearity of the curve was obtained in the thickness region above a certain lower limit of about 8 nm and the sheet resistance deviated from and was much larger than that according to the logarithmic linearity rule when the thickness was further decreased to be smaller than the limit indicating that the recording layer was formed in discrete areas and not in a continuum. This is the reason for the lower limit 8 nm of the thickness of the recording layer.

As to the upper limit of the thickness of the recording layer, reference can be made to the results obtained in Example 1 described below, from which it is understood that the maximum thickness of the recording layer should be 18 nm in order that the optimum recording power can be 10 mW or smaller corresponding to the maximum power output of lasers conventionally under practical use in magneto-optical recording media. Thus, the thickness of the recording layer should be in the range from 8 nm to 18 nm so as to give a magneto-optical recording medium having a high recording sensitivity with stability in the recording characteristics.

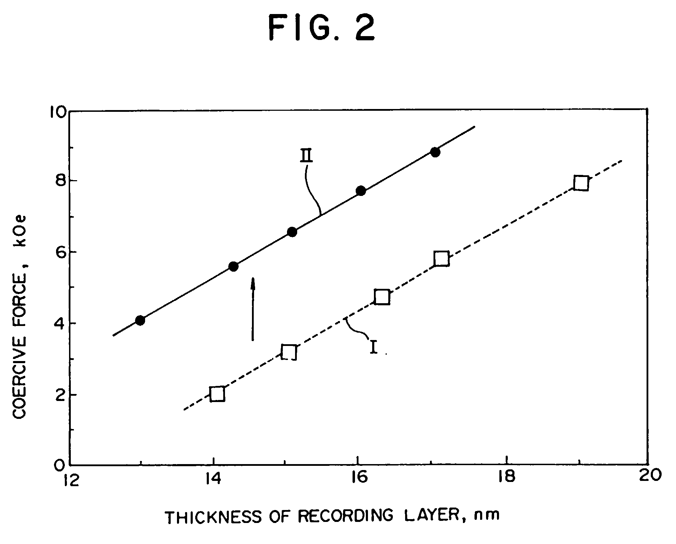

It is taught in Japanese Patent Kokai 2-240845 that the coercive force of the recording layer is decreased as the thickness of the layer is decreased. Indeed, a linear relationship was found as is shown in Figure 2 giving the value of the coercive force of the recording layer as a function of the thickness of the layer. This problem can be solved at least partly by increasing the content of terbium metal in the TbFeCo alloy. Namely, the coercive force $vs.$ layer thickness relationship was determined for the TbFeCo alloys having chemical compositions, one, of the formula $Tb_{20}(Fe_{0.9}Co_{0.1})_{80}$ and, the other, of the formula $Tb_{20+\alpha}(Fe_{0.9}Co_{0.1})_{80-\alpha}$, in which $\alpha$ is a positive number of 3, to give the results concurrently shown by the two curves I and II, respectively, in Figure 2.

In the next place, it is essential in the inventive magneto-optical recording medium that the phase difference $\delta$ defined by the equation $\delta = \tan^{-1}(\varepsilon/\theta k)$, in which $\varepsilon$ is the Kerr ellipticity of the regenerative light and $\theta k$ is the Kerr rotation angle, does not exceed a certain upper limit. In this regard, reference can be made to the results obtained in Example 2 described below, according to which the upper limit of the angle $\delta$ should be 10° so that a high C/N ratio can be obtained.

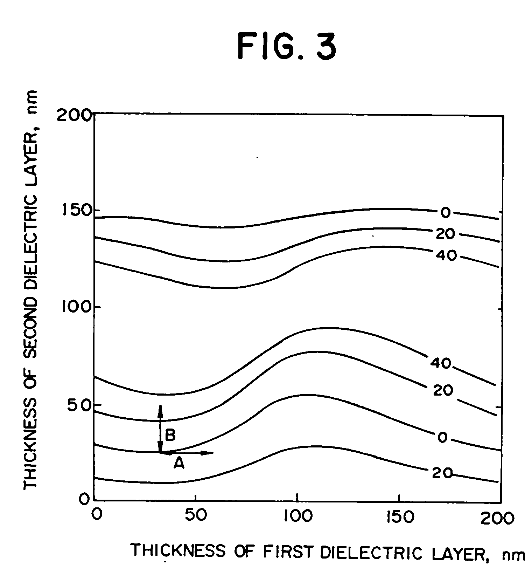

In order to estimate the value of $\delta$ in relation to the thickness of the dielectric layers, simulating calculations were made for the values of $\delta$ assuming that the incident light has a wavelength of 780 nm, the recording layer formed from an alloy of TbFeCo has a thickness of 13 nm, the first and the second dielectric layers were formed from SiN each having a varied thickness and the reflecting layer was formed from aluminum to give the results shown in Figure 3 which is a diagram to give the equivalent angle curves for the phase difference $\delta$ due to the Kerr ellipticity taking the thickness of the first dielectric layer and the thickness of the second dielectric layer as the abscissa and ordinate, respectively. The numerical figure on each of the curves is the value of $\delta$ in degrees. This diagram indicates much larger dependency of $\delta$ on the thickness of the second dielectric layer than on the thickness of the first dielectric layer. Imagine a point on Figure 3 corresponding to the thickness of 30 nm for the first dielectric layer and 25 nm for the second dielectric layer to give 0° of the angle $\delta$, for example, so that it is understrood that a shift of 25 nm in the thickness of the first dielectric layer as is indicated by the arrow A results in an increase of only 10° or less in the value of $\delta$ while a shift of 25 nm in the thickness of the second dielectric layer as is indicated by the arrow B results in an increase of more than 30° in the value of $\delta$.

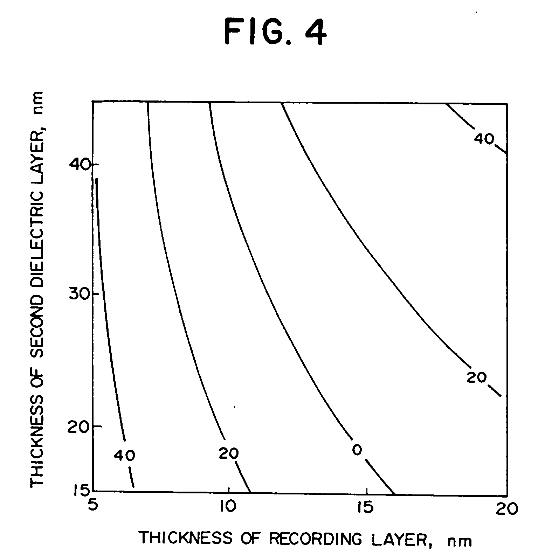

Figure 4 is a diagram to give the equivalent angle curves for the phase difference $\delta$ taking the thickness of the recording layer and the thickness of the second dielectric layer as the abscissa and ordinate, respectively, as a result of the similar simulating calculations undertaken under the same assumptions as above except that the thickness of the first dielectric layer was constant at 30 nm and the thickness of the recording layer was varied. This diagram indicates that the Kerr ellipticity E also depends on the thickness of the recording layer.

The above described dependency of the phase difference $\delta$ on several parameters indicates that optimization of the layered structure of the magneto-optical recording medium taking into consideration the Kerr rotation angle $\theta k$ and the reflectivity R as well as the Kerr ellipticity $\varepsilon$ in addition should be made by means of the selection for the values of the thickness of the recording layer and the second dielectric layer. For example, the phase difference $\delta$ can be zero by adequately selecting the second dielectric layer and the recording layer leaving the duty for the enhancement effect to the second dielectric layer so as to enable selection of the thickness and material of the first dielectric layer from the standpoint of the protecting characteristics for the recording layer.

In the following, the magneto-optical recording medium of the present invention is illustrated in more detail by way of examples.

Example 1.

Magneto-optical recording media were prepared each by providing a substrate plate of a polycarbonate resin having a diameter of 130 mm and a thickness of 1.2 mm, on which a guide groove for tracking was formed, with a first dielectric layer of SiN in a thickness of 30 to 100 nm, a recording layer of a TbFeCo alloy having a varied thickness of 5 to 25 nm, a second dielectric layer of SiN in a thickness of 15 to 45 nm and a reflecting layer of aluminum having a thickness of 40 nm successively formed thereon by the sputtering method so as to keep approximate constancy of each of the Kerr rotation angle and the reflectivity.

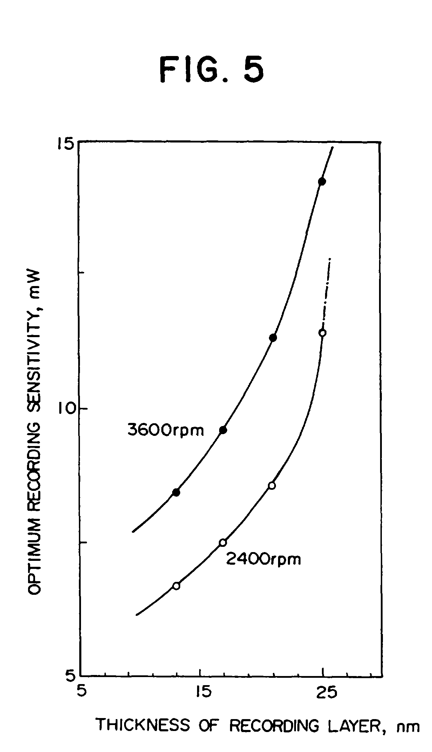

The above prepared magneto-optical recording media were each subjected to the measurement of the optimum recording power, which was assumed to give the minimum of the secondary higher harmonics, under the conditions including a frequency of 3.9 MHz, revolution of 2400 rpm or 3600 rpm and distance of the measuring point of 60 mm from the center to give the results shown in Figure 5 as a function of the thickness of the recording layer. It is understood from these results that the thickness of the recording layer should be 18 nm or smaller when the revolution is 3600 rpm in order that the optimum recording sensitivity does not exceed 10 mW.

Example 2.

Three magneto-optical recording media, in which the first dielectric layer had a constant thickness of 30 nm, were prepared each in a manner similar to Example 1 using a polycarbonate resin substrate having a diameter of 86 mm and a thickness of 1.2 mm by the sputtering method. These recording media had an approximately constant Kerr rotation angle and apporximately constant reflectivity but had varied values of the Kerr ellipticity. These three recording media were subjected to the measurement of the C/N ratio setting the recording power at the optimum corresponding to the minimum of the secondary higher harmonics under the conditions including a frequency of 3.9 MHz, revolution of 2400 rpm and distance of the measuring point of 24.1 mm from the center to give the results shown in Table 1 below which also indicates the thickness of the recording layer in nm, thickness of the second dielectric layer in nm and calculated values of $\delta = \tan^{-1} (\varepsilon/\theta k)$ in degrees. The results shown in Table 1 indicate that the C/N ratio can be improved by decreasing the Kerr ellipticity but is little influenced by the value of $\delta$ when it is 10° or smaller.

Table 1

| Thickness of recording layer, nm | Thickness of second dielectric layer, nm | $\delta = \tan^{-1}(\varepsilon/\theta k)$, degrees, calculated | C/N ratio, dB |
|---|---|---|---|
| 12 | 29 | 2 | 47.3 |
| 13 | 31 | 7 | 47.2 |
| 16 | 38 | 27 | 46.1 |

**Claims**

1. A magneto-optical recording medium which is an intergral body consisting of a substrate plate, a first dielectric layer formed on the substrate plate, a recording layer formed on the first dielectric layer, a second dielectric layer formed on the recording layer and a reflecting layer formed on the second dielectric layer, characterised in that each of the recording layer and the second dielectric layer has such a thickness that the angle $\delta$ given by the equation

$$\delta = \tan^{-1} (\varepsilon/\theta k),$$

in which $\varepsilon$ is the Kerr ellipticity of the regenerative light and $\theta k$ is the Kerr rotation angle, does not exceed 10°, the thickness of the recording layer being in the range from 8 nm to 18 nm

2. The magneto-optical recording medium as claimed in claim 1 wherein the first dielectric layer has a thickness not exceeding 60 nm.

**Patentansprüche**

1. Magnetooptischer Aufzeichnungsträger, der ein integraler Körper ist, bestehend aus einer Substratplatte, einer auf dieser gebildeten ersten dielektrischen Schicht, einer auf der ersten dielektrischen Schicht gebildeten Aufzeichnungsschicht, einer auf der Aufzeichnungsschicht gebildeten zweiten dielektrischen Schicht und einer auf der zweiten dielektrischen Schicht gebildeten Reflexionsschicht, dadurch gekennzeichnet, daß die Aufzeichnungsschicht und die zweite dielektrische Schicht jeweils eine derartige Dicke besitzen, daß der Winkel $\delta$, gegeben durch die Gleichung

$$\{\delta = \tan^{-1} (\varepsilon/\theta k\},$$

worin die Kerr-Elipsenform des Regenerativlichts, und θk der Kerr-Drehwinkel bedeuten, 10° nicht überschreitet, wobei die Dicke der Aufzeichnungsschicht im Bereich von 8 nm bis 18 nm liegt.

2. Magnetooptischer Aufzeichnungsträger gemäß Anspruch 1, bei dem die erste dielektrische Schicht eine Dicke aufweist, die 60 nm nicht überschreitet.

**Revendications**

1. Suppport d'enregistrement magnéto-optique qui constitue un ensemble intégral constitué d'une plaque de substrat, d'une première couche diélectrique formée sur la plaque de substrat, d'une couche d'enregistrement formée sur la première couche diélectrique, d'une seconde couche diélectrique formée sur la couche d'enregistrement et d'une couche réfléchissante formée sur la seconde couche diélectrique, caractérisé en ce que chacune de la couche d'enregistrement et de la seconde couche diélectrique présente une épaisseur telle que l'angle δ donné par l'équation

$$\delta = \tan^{-1}(\varepsilon/\Theta k),$$

dans laquelle ε est l'ellipticité de Kerr de la lumière de rétroaction et Θk est l'angle de rotation de Kerr, ne dépasse pas 10°, l'épaisseur de la couche d'enregistrement étant dans la plage de 8 nm à 18 nm.

2. Support d'enregistrement magnéto-optique selon la revendication 1 dans lequel la première couche diélectrique présente une épaisseur ne dépassant pas 60 nm.

# FIG. I

# FIG. 2

EP 0 509 467 B1

# FIG. 3

# FIG. 4

# FIG. 5